# EUROPÄISCHE PATENTSCHRIFT

(11) **EP 2 411 771 B1**
(45) Veröffentlichungstag und Bekanntmachung des Hinweises auf die Patenterteilung: **05.06.2019**
(21) Anmeldenummer: 09752295.7
(22) Anmeldetag: 11.11.2009
(51) Int. Cl.: G01D 5/347, B41F 17/18, B41J 3/407, B65C 9/06

(54) **DEVICE AND METHOD FOR PRINTING ON CONTAINERS AND CAPTURING THE ROTARY POSITION OF AT LEAST ONE ROTARY DEVICE PROVIDED FOR RECEIVING THE CONTAINER**
DISPOSITIF ET PROCÉDÉ POUR IMPRIMER SUR DES RÉCIPIENTS ET POUR DÉTECTER LA POSITION DE ROTATION D'AU MOINS UN DISPOSITIF DE ROTATION PRÉVU POUR RECEVOIR LE RÉCIPIENT
DISPOSITIF ET PROCÉDÉ POUR IMPRIMER DES RÉCIPIENTS ET DÉTECTION DE LA POSITION DE ROTATION D'AU MOINS UN DISPOSITIF DE ROTATION PRÉVU POUR RECEVOIR LE RÉCIPIENT

(30) Priorität: 27.03.2009 DE 102009014663
(43) Veröffentlichungstag der Anmeldung: 01.02.2012
(73) Patentinhaber: KHS GmbH, 44143 Dortmund (DE)
(72) Erfinder: BECKHAUS, Carsten, 59368 Werne (DE)
(86) Internationale Anmeldenummer: PCT/EP2009/008024
(87) Internationale Veröffentlichungsnummer: WO 2010/108527

(56) Entgegenhaltungen:
- EP-A2- 1 225 053
- EP-B1- 0 717 703
- DE-A1- 10 060 287
- DE-A1-102004 026 755
- DE-U1-202006 000 270
- JP-B1- 3 072 598
- US-A1- 2006 137 548
- ERNST ALFONS: "Digitale Längen- und Winkelmesstechnik" 1. Januar 2001 (2001-01-01), verlag moderne industrie , XP002577424 ISBN: 3478932645 Bd. 165, , Seiten 60-71 das ganze Dokument

## Beschreibung

Die Erfindung bezieht sich auf eine Vorrichtung zur Bedruckung von Behältern und zur Erfassung der Drehposition einer zur Aufnahme des Behälters vorgesehenen Drehvorrichtung mittels einer Sensoreinheit, bei der die Drehvorrichtung zum Antrieb des Behälters um eine Drehachse vorgesehen ist, sowie auf ein Verfahren gemäß dem Oberbegriff des Patentanspruches 15.

Verfahren und Vorrichtungen zum Bedrucken von Behältern sind grundsätzlich bekannt, insbesondere auch Verfahren und Vorrichtungen zum direkten Bedrucken von Behältern. Derartige Verfahren und Vorrichtungen finden insbesondere Einsatz in Behälterbehandlungsmaschinen in der Getränke- und Verpackungsindustrie.

Vorzugsweise weisen derartige Vorrichtungen zum vorzugsweise direkten Bedrucken von Behältern Druckköpfe auf, die beispielsweise auf einem ersten Maschinenteil angeordnet sind, wobei die zu bedruckenden Behälter auf einem zweiten, beweglichen Maschinenteil vorgesehen sind. Die Behälter sind hierbei vorzugsweise um Ihre Behälterachse drehbar auf dem beweglich ausgebildeten zweiten Maschinenteil gelagert, und zwar mittels jeweils eines Drehtellerelementes, das zu Aufnahme des Bodenbereichs des Behälters vorgesehen ist.

Zum direkten Bedrucken von Behältern, insbesondere auch solchen, die als Packmittel im Lebensmittel- und/oder Getränkebereich Verwendung finden, ist ein exaktes Anfahren einer vorgegebenen Druckposition erforderlich, um das Druckbild auf die exakt vorgegebene Druckposition aufbringen zu können. Um den Behälter jedoch über das Drehtellerelement in die vorgegebene Druckposition steuern zu können ist zunächst die Drehposition des Drehtellerelementes exakt zu ermitteln.

Druckschrift JP 3 072598 B1 betrifft eine Druckvorrichtung, die eine Bedruckung eines Behälters mittels eines Siebdruckverfahrens an einer vordefinierten Position ermöglicht. Dabei werden Behälter linear und taktweise von einer Behälteraufgabe an eine Druckstation und nach dem Bedrucken an der Druckstation an eine Behälterabgabe gefördert.

Die Druckschrift EP 1 225 053 A2 offenbart eine Druckvorrichtung zur digitalen Bedruckung eines Behälters und die Druckschrift US 2006/0137548 A1 offenbart schließlich eine Vorrichtung zur Bedruckung der Oberfläche von rotationssymmetrischen Behältern.

Aufgabe der Erfindung ist es daher, eine Vorrichtung und ein zugehöriges Verfahren zur Erfassung der Drehposition zumindest einer zur Aufnahme eines Behälters vorgesehenen Drehvorrichtung anzugeben, welche eine exakte Bestimmung der Drehposition des Behälters in Bezug auf den jeweils aktuell zugeordneten Druckkopf ermöglicht, wodurch ein optimaler Druck bzw. ein optimales Druckbild mit hoher Qualität erzielt werden kann.

Zur Lösung dieser Aufgabe ist eine Vorrichtung entsprechend dem Patentanspruch 1 ausgebildet. Ein Verfahren zur Erfassung der Drehposition zumindest einer zur Aufnahme eines Behälters vorgesehenen Drehvorrichtung ist Gegenstand des Patentanspruches 15.

Der wesentliche Aspekt der erfindungsgemäßen Vorrichtung ist darin zu sehen, dass die Sensoreinheit zur berührungslosen Erfassung der Drehposition der Drehvorrichtung ausgebildet ist. Durch die berührungslose Positionserfassung ist eine äußerst zuverlässige Bestimmung der aktuellen Drehposition möglich. Weiterhin vorteilhaft entfällt aufgrund der berührungslosen Positionserfassung eine aufwändige Verkabelung der vorzugsweise auf getrennten Maschinenteilen angeordneten Sensoreinheit und Drehvorrichtung. Auch können durch die Auswertung der erfassten Drehposition der Drehvorrichtung ggf. durch im Rahmen der Ansteuerung der getrennten Maschinenteile entstehende Positionierungsfehler über eine Steuer- und Auswerteeinheit kompensiert werden, d.h. im Rahmen der Winkelerfassung entstehende Toleranzen können schnell und einfach kompensiert werden.

Besonders vorteilhaft ist die Sensoreinheit in Form einer elektro-optischen oder elektro-magnetischen Sensoreinheit ausgebildet. Optische Sensorsysteme sind äußerst präzise, allerdings auch schmutzanfällig, wohingegen magnetische Sensorsysteme sehr robust und schmutzunempfindlich sind. Die Drehvorrichtung weist hierzu um die Drehachse rotierende Skaliermittel auf, die über die jeweilige Sensoreinheit berührungslos erfassbar sind.

Weiterbildungen, Vorteile und Anwendungsmöglichkeiten der Erfindung ergeben sich auch aus der nachfolgenden Beschreibung von Ausführungsbeispielen und aus den Figuren. Der Gegenstand der Erfindung ist in den Ansprüchen angegeben.

Die Erfindung wird im Folgenden anhand der Figuren an einem Ausführungsbeispiel näher erläutert. Es zeigen:
- Fig. 1: in sehr vereinfachter Seitenansicht eine Darstellung eine Druckstation mit Druckkopf und zugeordneter Sensoreinheit;
- Fig. 2: eine Draufsicht auf die Druckstationen gemäß Fig. 1 zusammen mit dem zu bedruckenden Behälter in Draufsicht;
- Fig. 3: eine perspektivische Ausschnittdarstellung der Sensoreinheit sowie einer zugeordneten Drehvorrichtung gemäß der Figuren 1 und 2;
- Fig. 4: eine schematische Funktionsdarstellung einer in Wirkverbindung mit der Drehvorrichtung stehenden elektro-optischen Sensoreinheit;
- Fig. 5: eine schematische Funktionsdarstellung einer in Wirkverbindung mit der Drehvorrichtung stehenden elektro-magnetischen Sensoreinheit und
- Fig. 6: eine schematische Funktionsdarstellung in perspektivischer Ansicht einer Anlage zum vorzugsweise direkten Bedrucken von Behältern.

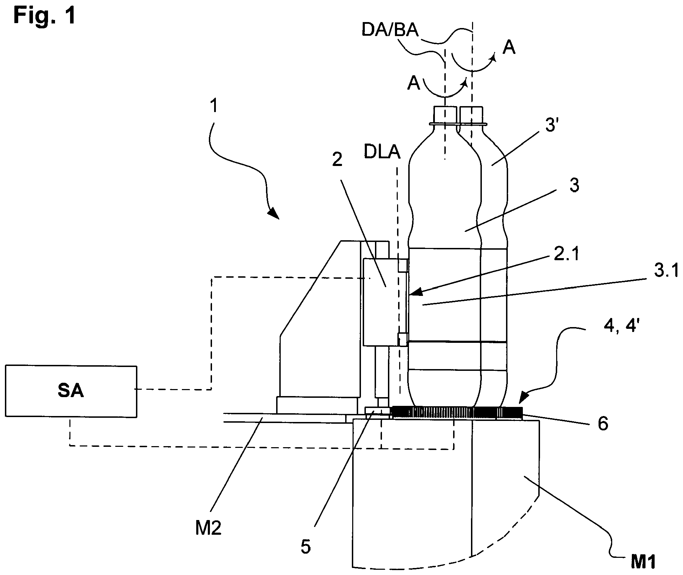

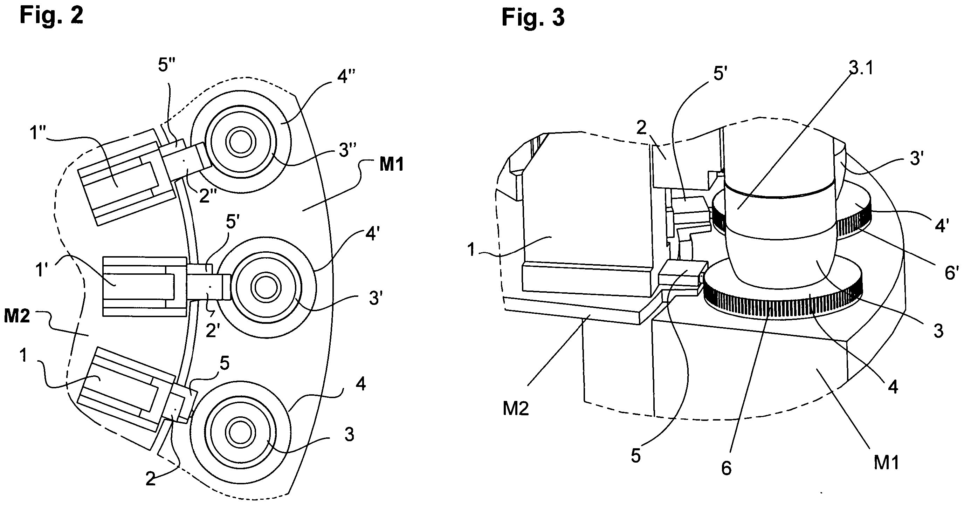

In den Figuren 1 und 2 sind mehrere Druckstationen 1, 1', 1" in schematischen Ansichten beispielhaft dargestellt. Eine Druckstation 1 verfügt hierbei jeweils über einen vorzugsweise elektrisch ansteuerbaren Druckkopf 2, 2', 2" zum Erzeugen von Druckbildern auf jeweils einer zu bedruckenden Fläche 3.1 an der Mantel- oder Unfangsfläche von Behältern 3, wobei die Fläche 3.1 beispielsweise direkt von der Mantel- oder Umfangsfläche gebildet ist.

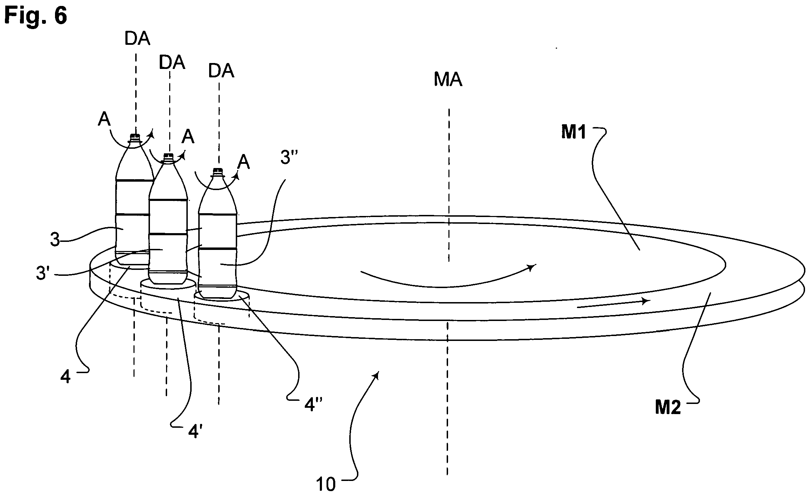

Die Druckstationen 1 können beispielsweise Teil einer Anlage 10 zum vorzugsweise direkten Bedrucken von Behältern 3 sein, deren Funktionsweise in Figur 6 in Form einer schematischen Funktionsdarstellung aufgezeigt ist. In der in Figur 1 dargestellten Anlage 10 sind aus Übersichtlichkeitsgründen jedoch die Drucksstationen 1, 1', 1" nicht eingezeichnet. Eine derartige Anlage 10 kann beispielsweise in einer übergeordneten Behälterbehandlungsmaschine, die in den Figuren nicht dargestellt ist, eingesetzt werden.

Zum Bedrucken der Behälter 3, 3', 3" sind diese um jeweils eine Drehachse DA, DA', DA" drehbar gelagert, und zwar vorzugsweise mittels wenigstens einer Drehvorrichtung 4, 4', 4", die zum Antrieb des jeweiligen Behälters 3, 3', 3" um die zugeorndete Drehachse DA, DA', DA" vorgesehen ist.

Behälter 3 im Sinne der Erfindung sind jedwede direkt bedruckbaren Packmittel, insbesondere Behälter, Dosen, Flaschen, aber auch andere Packmittel, die zumindest an einem Teilbereich ihrer Mantel- oder Umfangsfläche rotationssymmetrisch zu Ihrer Behälterlängsachse BA ausgebildet sind. Die Behälterlängsachse BA entspricht hierbei näherungsweise der Drehachse DA.

Zur Bestimmung der Drehposition des um die Drehachse DA drehbar gelagerten Behälters 3 ist ferner zumindest eine Steuer- und Auswerteeinheit SA vorgesehen, die in Figur 1 schematisch dargestellt ist. Mittels der Steuer- und Auswerteeinheit SA erfolgt die Steuerung des Antriebs der Drehvorrichtung 4 um die Drehachse DA.

Zur Erfassung der exakten Drehposition D der Drehvorrichtung 4, 4', 4" ist zumindest eine Sensoreinheit 5, 5', 5" vorgesehen, die vorzugsweise dem elektrisch ansteuerbaren Druckkopf 2, 2', 2" zugeordnet ist und somit Teil der Druckstation 1, 1', 1" ist. Die Ansteuerung sowohl der Druckkopfeinheit 2, 2', 2" als auch der Sensoreinheit 5, 5', 5" erfolgt vorzugsweise ebenfalls über die zumindest eine Steuer- und Auswerteeinheit SA.

Der elektrisch ansteuerbare Druckkopf 2 ist hierbei beispielsweise zur zeilenweisen Erzeugung des Druckbildes auf der zu bedruckenden Fläche 3.1 des Behälters 3 ausgebildet, wobei sich als elektrisch ansteuerbarer Druckkopf 2 insbesondere elektrostatische Druckköpfe eignen. Beispielsweise kann der elektrisch ansteuerbare Druckkopf 2 ein Tintenstrahl-Druckkopf oder ein eine Vielzahl von Einzeldüsen aufweisender Druckkopf sein, der an einer aktiven Druckkopfseite 2.1 in einer Drucckopflängsachse DLA in wenigstens einer Reihe aufeinander folgend angeordnete und zur Abgabe von Druckfarbe individuell ansteuerbare Einzeldüsen aufweist. Unter Druckfarbe ist ganz allgemein ein Betriebsmittel zu verstehen, mit dem unter Verwendung des elektrisch ansteuerbaren Druckkopfes 2 der jeweilige Aufdruck bzw. das jeweilige Druckbild erzeugt wird.

Der Behälter 3, 3', 3" besitzt zumindest im Bereich der bedruckenden Fläche 3.1 eine Außen- oder Mantelfläche, die rotationssymmetrisch, d.h. bei der dargestellten Ausführungsform kreiszylinderförmig im Bezug auf die Behälterlängsachse BA bzw. die Drehachse DA ausgebildet ist. Dementsprechend ist auch die zu bedruckende Fläche 3.1, die entweder direkt die Außenfläche des Behälters 3 oder aber die Fläche eines auf die Außenfläche des Behälters 3 aufgebrachten Substrats ist, im Bezug auf die Behälterlängsachse BA kreiszylinderförmig ausgebildet.

Während des Druckens wird der Behälter 3 entsprechend dem Pfeil A um seine Behälterachse BA bzw. die Drehachse DA gedreht oder rotiert, und zwar solange bis er die zum Drucken erforderliche Drehposition aufweist. Ausgehend von dieser Drehposition wird die zu bedruckende Fläche 3.1 relativ zu dem mit seiner Drucklängsachse DLA parallel zur Drehachse DA angeordneten Druckkopfes 2 bewegt und somit das Druckbild auf der zu bedruckenden Fläche 3.1 zeilenweise erstellt. Der Druckkopf 2 besitzt an seinem aktiven, das jeweilige Druckbild erzeugenden und die Vielzahl von Einzeldüsen aufweisenden Druckkopfende 2.1 in Richtung der Drehachse DA eine Breite, die wenigstens gleich der Abmessung ist, die das zu erzeugende Druckbild in Richtung der Drehachse DA besitzt.

Entscheidend für die Qualität des Druckbildes ist u.a., dass eine vorgegebene Druckposition des Behälters 3 zu Beginn des Druckvorganges vorliegt, insbesondere da durch mehrere Druckköpfe 2 beispielsweise unterschiedliche Grundfarbtöne des Druckbildes auf die Druckfläche 3.1 aufgebracht werden und somit eine exakte Überlagerung der unterschiedliche Farben aufweisenden Druckbilder erforderlich ist. Zum Anfahren der Druckposition ist die Kenntnis der exakten Drehposition D des Behälters 3 bzw. der den Behälter 3 aufnehmenden Drehvorrichtung 4 bezogen auf den Druckkopf 2 erforderlich, d.h. ausgehend von der exakten Drehposition D des Behälters 3 bzw. der den Behälter 3 aufnehmenden Drehvorrichtung 4 wird zum Anfahren der Druckposition der Behälter 3 ggf. um Drehachse DA vor- oder nachjustiert.

Erfindungsgemäß erfolgt die Erfassung der Drehposition D der Drehvorrichtung 4 über eine berührungslos arbeitende Sensoreinheit 5. Die Drehposition D der Drehvorrichtung 4 wird vorzugsweise in Form eines Winkelbetrages in Bezug auf eine Referenzdrehposition DR angegeben, und zwar jeweils bezogen auf eine Drehbewegung um die Drehachse DA.

Vorteilhaft ist die Sensoreinheit 5 als elektro-optische oder elektro-magnetische Sensoreinheit ausgebildet, die mit Skaliermittel 6 zusammenwirkt, die mit der Drehvorrichtung 4 verbunden sind. Hierbei sind die Skaliermittel 6 vorzugsweise an der Mantelfläche der um die Drehachse DA rotierenden Drehvorrichtung 4 angeordnet, d.h. die Skaliermittel 6 rotieren selbst um die Drehachse DA, und zwar derart, dass diese berührungslos über die Sensoreinheit 5 erfassbar sind. Die Skaliermittel 6 weisen zur Anzeige unterschiedlicher Drehpositionen D der Drehvorrichtung 4 mehrere, vorzugsweise in regelmäßigen Abständen vorgesehene Messmarken 6.1 auf.

In einer bevorzugten Ausführungsform ist die Drehvorrichtung 4 durch ein Drehtellerelement gebildet, welches über eine in den Figuren nicht dargestellte Antriebseinheit um die Drehachse DA antreibbar ist, wobei die Ansteuerung der Antriebseinheit vorzugsweise über die Steuer- und Auswerteinheit SA erfolgt. Das Drehtellerelement 4 weist einen im Wesentlichen zylinderförmigen Grundkörper auf, der eine konzentrisch zu Drehachse DA verlaufende Zylindermantelfläche 4.1 umfasst.

Gemäß dem in den Figuren 1 bis 5 dargestellten Ausführungsbeispiel sind die Sensoreinheit 5 und das Drehtellerelement 4 näherungsweise in einer gemeinsamen, senkrecht zur Drehachse DA verlaufenden Ebene angeordnet, so dass über die Sensoreinheit 5 berührungslos die Zylindermantelfläche 4.1 des Drehtellerelementes 4 erfasst werden kann. Zur Bestimmung der Drehposition D des Drehtellerelementes 4 über die berührungslose Sensoreinheit 5 sind die Skaliermittel 6 auf der Zylindermantelfläche 4.1 des Drehtellerelementes 4 angeordnet.

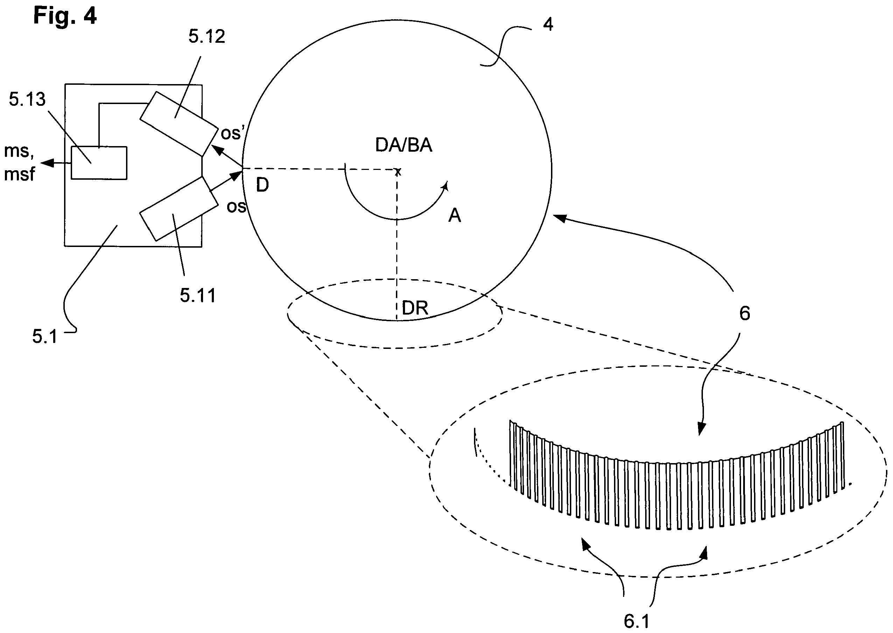

In einer ersten, in Figur 4 beispielhaft angedeuteten Ausführungsform ist die berührungslose Sensoreinheit 5 als elektro-optische Sensoreinheit 5.1 ausgebildet, die zumindest eine optische Sendeeinheit 5.11 zur Beaufschlagung der Skaliermittel 6 der Drehvorrichtung 4 mit einem optischen Signal os und zumindest eine optische Empfangseinheit 5.12 zur Erfassung eines von den Skaliermittel 6 der Drehvorrichtung 4 reflektierten optischen Signals os' aufweist.

Die rotierenden Skaliermittel 6 sind hierzu zur von der aktuellen Drehposition D der Drehvorrichtung 4 abhängigen Reflexion des von der optischen Sensoreinheit 5.11 empfangenen optischen Signals os ausgebildet, und zwar sind die Messmarken 6.1 des rotierenden Skaliermittel 6 durch mehrere konzentrisch um die Drehachse DA aneinander anschließende Reflexionsabschnitte gebildet, wobei einem Reflexionsabschnitt jeweils eine Änderung der Drehposition D der Drehvorrichtung 4 um einen vorgegebenen Winkelbetrag zugeordnet ist.

Zur Erfassung der Drehposition D des Drehtellerelementes 4 wird über die elektro-optische Sendeeinheit 5.11 das optische Signal os erzeugt und an die an der Zylindermantelfläche 4.1 des Drehtellerelementes 4 angeordneten rotierenden Skaliermittel 6 übertragen. Mittels der die Messmarken 6.1 bildenden Reflexionsabschnitte wird das das optische Signal os zumindest abschnittweise reflektiert und somit ein vorzugsweise gepulstes optisches Signal os' erzeugt, welches durch die optische Empfangseinheit 5.12 in der elektro-optischen Sensoreinheit 5.1 erfasst wird. Das über die optische Empfangseinheit 5.12 erfasste, reflektierte optische Signal os' wird mittels einer in der elektro-optischen Sensoreinheit 5.1 vorgesehen und mit der optische Empfangseinheit 5.12 verbunden Auswerteelektronik 5.13 ausgewertet und zumindest ein elektrisches Messsignal ms und ggf. ein Referenzmesssignal msf erzeugt, welche an die Steuer- und Auswerteeinheit SA zur Weiterverarbeitung übertragen werden.

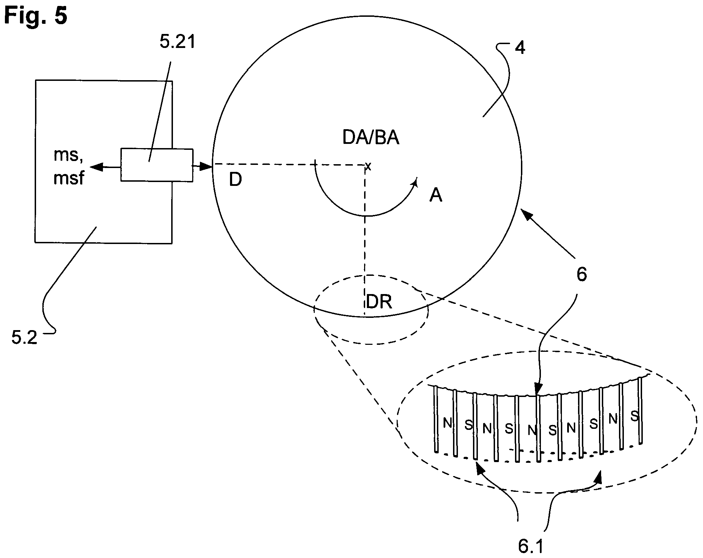

In einer zweiten, in Figur 5 beispielhaft angedeuteten Ausführungsform ist die die berührungslose Sensoreinheit 5 als elektro-magnetische Sensoreinheit 5.2 ausgebildet, die über zumindest eine magneto-resistive Sensorelektronik 5.21 zur Erfassung zumindest eines Magnetfeldes verfügt. Die rotierenden Skaliermittel 6 sind entsprechend zur Erzeugung zumindest eines Magnetfeldes ausgebildet, und zwar sind diese beispielsweise durch zumindest eine vorzugsweise ringförmige, um die Drehachse DA rotierende Magnetträgerschicht gebildet, die in regelmäßigen Abschnitten mit magnetischen Nord- und Südpolen magnetisiert ist. Die Nord- und Südpole bilden hierbei die Messmarken 6.1 der rotierenden Magnetträgerschicht aus, welche vorzugsweise konzentrisch um die Drehachse DA entlang der Zylindermantelfläche 4.1 des Drehtellerelementes 4 verteilt sind. Hierbei ist jeweils einem Nord- und Südpol eine Änderung der Drehposition DD der Drehtellerelementes 4 um einen vorgegebenen Winkelbetrag zugeordnet, d.h. ein Nord-Südpol zeigt eine Änderung der Drehposition DD des Drehtellerelementes 4 um einen vorgegebenen Winkelbetrag an. Die Magnetträgerschicht ist zur Ausbildung eines "magnetisches Maßband" vorzugsweise auf ein Stahlband auflaminiert, welches fest mit der Zylindermantelfläche 4.1 des Drehtellerelementes 4 verbunden ist. Zum Schutz gegen äußere mechanische Einflüsse kann die Magnetträgerschicht mit einer Schutzschicht überzogen sein.

Zur Erfassung der Drehposition D des Drehtellerelementes 4 wird durch die magneto-resistive Sensorelektronik 5.21, insbesondere über einen hierzu vorgesehenen magneto-resistiven Sensorkopf die Magnetträgerschicht berührungslos abgetastet. Das hierdurch in der magneto-resistive Sensorelektronik 5.21 erfasste zumindest eine Messsignal ms wird ggf. zusammen mit einem Referenzmesssignal msf anschließend zur Weiterverarbeitung an die Steuer- und Auswerteeinheit SA übertragen.

Ausgehend von den in der Steuer- und Auswerteeinheit SA empfangenen Messsignalen ms und ggf. zumindest einem vorliegenden Referenzmesssignal msf wird die aktuelle Drehposition D des Drehtellerelementes 4 bestimmt und abhängig davon die Druckposition des durch das Drehtellerelementes 4 aufgenommen Behälters 3 exakt eingestellt.

Die in Figur 6 mittels einer schematischen Funktionsdarstellung in perspektivischer Ansicht dargestellte Anlage 10 zum vorzugsweise direkten Bedrucken von Behältern 3, 3', 3" umfasst zumindest ein erstes Maschinenteil M1 und ein zweites Maschinenteil M2, wobei zumindest eines der Maschinenteile M1, M2 um eine Maschinenachse MA rotierend ausgebildet ist. Hierbei verläuft die Maschinenachse MA näherungsweise parallel zur jeweiligen Drehachse DA der Behälter 3.

In einer bevorzugten Ausführungsform sind sowohl das erste als auch das zweite Maschinenteil um eine gemeinsame Maschinenachse MA rotierend ausgebildet, und zwar werden diese jeweils von einer in den Figur 6 nicht dargestellten Antriebseinheit separat voneinander angetrieben. Die Ansteuerung der Antriebseinheiten kann beispielsweise wiederum über die Steuer- und Auswerteeinheit SA erfolgen.

Vorzugsweise ist das erste Maschinenteil M1 zur Aufnahme mehrere Drehvorrichtungen bzw. Drehtellerelementen 4, 4', 4" ausgebildet und die die Sensoreinheiten 5, 5.1, 5.2 aufweisenden Druckstationen 1 auf dem zweiten Maschinenteil M2 angeordnet, wobei in Figur 6 die Sensoreinheiten 5, 5.1, 5.2 aufweisenden Druckstationen 1, 1', 1" nicht dargestellt sind. Besonders bevorzugt ist das erste Maschinenteil M1 zur Aufnahme einer Vielzahl von Drehvorrichtungen bzw. Drehtellerelementen 4, 4', 4" durch einen ringförmig Rotor gebildet. In Figur 6 sind beispielhaft lediglich drei, auf dem ringförmigen Rotor angeordnete Drehtellerelemente 4, 4', 4" dargestellt.

Hierbei rotieren das erste und zweite Maschinenteil M1, M2 unterschiedlich zueinander, d.h. weisen unterschiedliche Rotationsgeschwindigkeiten auf. Somit können die Druckstationen 1, 1', 1" relativ zu den die Behältern 3, 3', 3" aufnehmenden Drehvorrichtungen bzw. Drehtellerelementen 4, 4', 4" bewegt werden, wodurch ein individuelles Anfahren von vorgegebenen Druckpositionen möglich wird.

Durch die erfindungsgemäße berührungslose Erfassung der Drehposition D können besonders einfach Synchronisationsungenauigkeiten zwischen dem ersten und zweiten Maschinenteil M1, M2 über die Ansteuerung der Druckköpfe 2 sowie der Drehtellerelemente 4, 4', 4" durch die Steuer- und Auswerteeinheit SA kompensiert bzw. berücksichtigt werden, und zwar im Rahmen einer dynamischen Signalverarbeitung.

Die Erfindung wurde voranstehend an einem Ausführungsbeispiel beschrieben. Es versteht sich, dass zahlreiche Änderungen sowie Abwandlungen möglich sind, ohne dass dadurch der der Erfindung zugrunde liegende Erfindungsgedanke verlassen wird.

Weiterhin ist es möglich, dass der Druckkopf 2, 2', 2" aus mehreren Einzeldruckköpfen besteht, die dann beispielsweise für einen Mehrfarbendruck jeweils zum Drucken eines Farbsatzes dieses Mehrfarbendruckes ausgebildet und angesteuert sind.

Vorstehend wurde davon ausgegangen, dass bei der Anlage 10 mehrere Druckstationen 1, 1', 1" an einem als Rotor ausgebildeten zweiten Maschinenteil M2 vorgesehen sind. Selbstverständlich kann eine wenigstens eine Druckstation 1, 1', 1" aufweisende Anlage 10 zum Bedrucken der Behälter 3 auch in einer anderen Form ausgeführt sein, beispielsweise als Geradläufer mit wenigstens einer an einem Transporteur vorgesehenen Druckstation 1, in die die Behälter 3 zum Bedrucken jeweils getaktet eingebracht und nach dem Bedrucken entnommen werden, oder aber mit mehreren synchron mit dem Transporteur bewegten Druckstationen 1.

### Bezugszeichenliste

- 1, 1', 1": Druckstation
- 2, 2', 2": Druckkopf
- 2.1: aktive Seite oder aktiver Teil des Druckkopfes 2
- 3, 3', 3": zu bedruckender Behälter
- 3.1: zu bedruckende Fläche
- 4, 4', 4": Drehvorrichtung bzw. Drehtellerelement
- 5, 5', 5": Sensoreinheit
- 5.1: elektro-optische Sensoreinheit
- 5.11: optische Sendeinheit
- 5.12: optische Empfangseinheit
- 5.13: Auswerteeinheit
- 5.2: elektro-magnetische Sensoreinheit
- 5.21: magneto-resistive Sensorelektronik
- 6: Skaliermittel
- 6.1: Messmarken

- 10: Anlage

- A: Dreh- oder Rotationsbewegung
- D: Drehposition
- DR: Referenzdrehposition
- DA,: Drehachse
- DLA: Druckkopflängsachse
- BA: Behälterlängsachse
- os: optisches Signal
- os': reflektieres optisches Signal
- M1: erstes Maschinenteil
- M2: zweites Maschinenteil
- MA: Maschinenachse
- ms: Messsignal
- msf: Referenzmesssignal
- SA: Steuer- und Auswerteeinheit
- N-S: Nord-Südpol

## Patentansprüche

1. Vorrichtung zur Bedruckung von Behältern (3), umfassend zumindest eine zur Aufnahme des Behälters (3) vorgesehene Drehvorrichtung (4), zumindest eine Sensoreinheit (5) sowie ein erstes Maschinenteil (M1) und ein zweites Maschinenteil (M2), wobei die Drehvorrichtung (4) zum Antrieb des Behälters (3) um eine Drehachse (DA) eingerichtet ist, wobei die Vorrichtung zur Erfassung der Drehposition (D) der zumindest einen Drehvorrichtung (4) mittels der zumindest einen Sensoreinheit (5) eingerichtet ist, wobei die Vorrichtung mehrere Druckstationen (1, 1', 1") mit elektrisch ansteuerbaren Druckköpfen (2) in Form von Tintenstrahldruccköpfen aufweist, wobei die Sensoreinheit (5) zur berührungslosen Erfassung der Drehposition (D) bezogen auf die Drehachse (DA) der Drehvorrichtung (4) ausgebildet ist und jeweils zumindest einer Sensoreinheit (5, 5.1, 5.2) eine Druckkopfeinheit (2) zum Bedrucken eines Behälters (3) zugeordnet ist, wobei die Drehvorrichtung (4) durch ein Drehtellerelement gebildet ist, wobei die Sensoreinheit (5) und das Drehtellerelement in einer gemeinsamen, senkrecht zur Drehachse (DA) verlaufenden Ebene angeordnet sind, so dass über die Sensoreinheit (5) berührungslos eine Zylindermantelfläche (4.1) des Drehtellerelements erfassbar ist, wobei an der Zylindermantelfläche (4.1) des Drehtellerelements Skaliermittel (6) vorgesehen sind, mittels derer die Drehposition (D) des Drehtellerelements über die Sensoreinheit (5) erfassbar ist, wobei die zumindest eine Drehvorrichtung (4) auf dem ersten Maschinenteil (M1) und die zumindest eine Sensoreinheit (5, 5.1 ,5.2) auf dem zweiten Maschinenteil (M2) angeordnet sind und wobei zumindest eines der Maschinenteile (M1, M2) um eine gemeinsame Maschinenachse (MA) rotierend ausgebildet ist, wobei die Maschinenachse (MA) parallel zur Drehachse (DA) verläuft.

2. Vorrichtung nach Anspruch 1, **dadurch gekennzeichnet, dass** die Sensoreinheit (5) durch eine elektro-optische Sensoreinheit (5.1) oder eine elektro-magnetische Sensoreinheit (5.2) gebildet ist.

3. Vorrichtung nach Anspruch 1 oder 2, **dadurch gekennzeichnet, dass** die rotierenden Skaliermittel (6) zur Anzeige unterschiedlicher Drehpositionen (D) der Drehvorrichtung (4) mehrere Messmarken (6.1) aufweisen.

4. Vorrichtung nach Anspruch 2 oder 3, **dadurch gekennzeichnet, dass** die elektro-optische Sensoreinheit (5.1) zumindest eine optische Sendeeinheit (5.11) zur Beaufschlagung der rotierenden Skaliermittel (6.1) mit einem optischen Signal (os) und zumindest eine optische Empfangseinheit (5.12) zur Erfassung eines von den Skaliermitteln (6) reflektierten optischen Signals (os') aufweist.

5. Vorrichtung nach Anspruch 4, **dadurch gekennzeichnet, dass** die rotierenden Skaliermittel (6) zur von der aktuellen Drehposition (D) der Drehvorrichtung (4) abhängigen Reflexion des von der optischen Sensoreinheit empfangenen optischen Signals (os) ausgebildet sind.

6. Vorrichtung nach Anspruch 5, **dadurch gekennzeichnet, dass** die Messmarken (6.1) des rotierenden Skaliermittels (6) durch mehrere, konzentrisch um die Drehachse (DA) angeordnete Reflexionsabschnitte gebildet sind.

7. Vorrichtung nach Anspruch 6, **dadurch gekennzeichnet, dass** ein Reflexionsabschnitt eine Änderung der Drehposition (D) der Drehvorrichtung (4) um einen vorgegebenen Winkelbetrag anzeigt.

8. Vorrichtung nach Anspruch 2 oder 3, **dadurch gekennzeichnet, dass** die elektro-magnetische Sensoreinheit (5.2) zumindest eine magneto-resistive Sensorelektronik (5.21) zur Erfassung zumindest eines Magnetfeldes aufweist.

9. Vorrichtung nach Anspruch 8, **dadurch gekennzeichnet, dass** die rotierenden Skaliermittel (6) zur Erzeugung zumindest eines Magnetfeldes ausgebildet sind.

10. Vorrichtung nach Anspruch 9, **dadurch gekennzeichnet, dass** die rotierenden Skaliermittel (6) durch zumindest eine um die Drehachse (DA) rotierend angeordnete Magnetträgerschicht gebildet sind, welche in regelmäßigen Abschnitten konzentrisch um die Drehachse (DA) mit Nord- und Südpolen magnetisiert ist.

11. Vorrichtung nach Anspruch 10, **dadurch gekennzeichnet, dass** über die magneto-resistive Sensorelektronik (5.21) die Nord-Südpole der Magnetträgerschicht erfassbar sind.

12. Vorrichtung nach Anspruch 10 oder 11, **dadurch gekennzeichnet, dass** ein Nord-Südpol eine Änderung der Drehposition (D) der Drehvorrichtung (4) um einen vorgegebenen Winkelbetrag anzeigt.

13. Vorrichtung nach Anspruch 1, **dadurch gekennzeichnet, dass** das erste und zweite Maschinenteil (M1, M2) unterschiedlich zueinander rotierend ausgebildet sind.

14. Vorrichtung nach Anspruch 1 oder 13, **dadurch gekennzeichnet, dass** das erste Maschinenteil (M1) zur Aufnahme einer Vielzahl von Drehvorrichtungen (4, 4', 4") ausgebildet ist, und zwar in Form eines ringförmigen Rotors.

15. Verfahren zur Bedruckung zumindest eines Behälters (3) und zur Erfassung der Drehposition (D) zumindest einer zur Aufnahme des Behälters (3) vorgesehenen Drehvorrichtung (4), bei dem mittels zumindest einer Sensoreinheit (5) die Drehposition (D) wenigstens einer zum Antrieb des Behälters (3) um eine Drehachse (DA) vorgesehenen Drehvorrichtung (4) erfasst wird, **dadurch gekennzeichnet, dass** eine Vorrichtung gemäß einem der Ansprüche 1 bis 14 verwendet wird und über die Sensoreinheit (5) die Drehposition (D) der Drehvorrichtung (4) berührungslos erfasst wird.

16. Verfahren nach Anspruch 15, **dadurch gekennzeichnet, dass** die Drehposition (D) der Drehvorrichtung (4) optisch erfasst wird.

17. Verfahren nach Anspruch 15 oder 16, **dadurch gekennzeichnet, dass** die Drehposition (D) der Drehvorrichtung (4) magnetisch erfasst wird.

## Claims

1. Device for printing containers (3), comprising at least one rotary device (4) provided for receiving a container (3), at least one sensor unit (5), and a first machine part (M1) and a second machine part (M2), wherein the rotary device (4) is provided for driving the container (3) about a rotary axis (DA), wherein the device is configured such as to record the rotary position (D) of the at least one rotary device (4) by means of the at least one sensor unit (5), wherein the device comprises a plurality of printing stations (1, 1', 1") with electrically actuated printing heads (2) in the form of ink-jet printing heads, wherein the sensor unit (5) is designed for the noncontact recording of the rotary position (D) of the rotary device (4) relative to the rotary axis (DA), and in each case one printing head unit (2) is assigned to at least one sensor unit (5, 5.1, 5.2) for the printing of a container (3), wherein the rotary device (4) is formed by a rotary plate element, wherein the sensor unit (5) and the rotary plate element are arranged in a common plane running perpendicular to the rotary axis (DA), such that, by means of the sensor unit (5), a cylindrical casing surface (4.1) of the rotary plate element can be recorded, wherein scaling means (6) are provided at the cylindrical casing surface (4.1) of the rotary plate element, by means of which the rotary position (D) of the rotary plate element can be recorded by way of the sensor unit (5), wherein the at least one rotary device (4) is arranged on the first machine part (M1) and the at least one sensor unit (5, 5.1, 5.2) is arranged on the second machine part (M2), and wherein at least one of the machine parts (M1, M2) are configured such as to rotate about a common machine axis (MA), and wherein the machine axis (MA) runs parallel to the rotary axis (DA).

2. Device according to claim 1, **characterised in that** the sensor unit (5) is formed by an electro-optical sensor unit (5.1) or an electromagnetic sensor unit (5.2).

3. Device according to claim 1 or 2, **characterised in that** the rotary scaling means (6) comprise a plurality of measuring marks (6.1) for displaying different rotary positions (D) of the rotary device (4).

4. Device according to claim 2 or 3, **characterised in that** the electro-optical sensor unit (5.1) comprises at least one optical transmitting unit (5.11) for imposing an optical signal (os) on the rotary scaling means (6.1), and at least one optical receiving unit (5.12) for capturing an optical signal (os') reflected from the scaling means (6).

5. Device according to claim 4, **characterised in that** the rotary scaling means (6) are configured for the reflection of the optical signal (os) received by the optical sensor unit, dependent on the present rotary position (D) of the rotary device (4).

6. Device according to claim 5, **characterised in that** the measuring marks (6.1) of the rotary scaling means (6) are formed by a plurality of reflection sections arranged concentrically about the rotary axis (DA).

7. Device according to claim 6, **characterised in that** a reflection section displays a change of the rotary position (D) of the rotary device (4) by a predetermined angle amount.

8. Device according to claim 2 or 3, **characterised in that** the electromagnetic sensor unit (5.2) comprises at least one magneto-resistive sensor electronics element (5.21) for detecting at least one magnetic field.

9. Device according to claim 8, **characterised in that** the rotary scaling means (6) are configured such as to produce at least one magnetic field.

10. Device according to claim 9, **characterised in that** the rotary scaling means (6) are formed by at least one magnet carrier layer arranged such as to rotate about the rotary axis (DA), which is magnetised in regular sections concentrically about the rotary axis (DA), with north and south poles.

11. Device according to claim 10, **characterised in that** the north and south poles of the magnet carrier layer can be detected by means of the magneto-resistive sensor electronics unit (5.21).

12. Device according to claim 10 or 11, **characterised in that** a north-south pole indicates a change in the rotary position (D) of the rotary device (4) by a predetermined angle amount.

13. Device according to claim 1, **characterised in that** the first and second machine parts (M1, M2) are configured such as to rotate differently in relation to one another.

14. Device according to claim 1 or 13, **characterised in that** the first machine part (M1) is configured such as to receive a plurality of rotary devices (4, 4', 4"), and specifically in the form of a ring-shaped rotor.

15. Device for printing at least one container (3) and for capturing the rotary position (D) of at least rotary device (4) provided for receiving the container (3), wherein, by means of at least one sensor unit (5), the rotary position (D) of at least one rotary device (4), provided such as to drive the container (3) about a rotary axis (DA), is recorded, **characterised in that** a device according to any one of claims 1 to 14 is used, and, by means of the sensor unit (5), the rotary position (D) of the rotary device (4) is captured without contact.

16. Method according to claim 15, **characterised in that** the rotary position (D) of the rotary device (4) is recorded optically.

17. Method according to claim 15 or 16, **characterised in that** the rotary position (D) of the rotary device (4) is recorded magnetically.

## Revendications

1. Dispositif pour imprimer des récipients (3), comprenant au moins un dispositif de rotation (4) prévu pour recevoir le récipient (3), au moins une unité de capteur (5) ainsi qu'une première partie de machine (M1) et une seconde partie de machine (M2), dans lequel le dispositif de rotation (4) est aménagé pour l'entraînement du récipient (3) autour d'un axe de rotation (DA), dans lequel le dispositif est aménagé pour la détection de la position de rotation (D) de l'au moins un dispositif de rotation (4) au moyen de l'au moins une unité de capteur (5), dans lequel le dispositif présente plusieurs stations d'impression (1, 1', 1") avec des têtes d'impression à commande électrique (2) sous forme de têtes d'impression à jet d'encre, dans lequel l'unité de capteur (5) est réalisée pour la détection sans contact de la position de rotation (D) par rapport à l'axe de rotation (DA) du dispositif de rotation (4) et une unité de tête d'impression (2) est associée respectivement à au moins une unité de capteur (5, 5.1, 5.2) pour l'impression d'un récipient (3), dans lequel le dispositif de rotation (4) est formé par un élément de plateau tournant, dans lequel l'unité de capteur (5) et l'élément de plateau tournant sont agencés dans un plan commun s'étendant perpendiculairement à l'axe de rotation (DA), de sorte qu'une surface d'enveloppe du cylindre (4.1) de l'élément de plateau tournant peut être détectée sans contact par le biais de l'unité de capteur (5), dans lequel des moyens de mise à l'échelle (6) sont prévus au niveau de la surface d'enveloppe du cylindre (4.1) de l'élément de plateau tournant, au moyen desquels la position de rotation (D) de l'élément de plateau tournant peut être détectée par le biais de l'unité de capteur (5), dans lequel l'au moins un dispositif de rotation (4) est agencé sur la première partie de machine (M1) et l'au moins une unité de capteur (5, 5.1, 5.2) est agencée sur la seconde partie de machine (M2) et dans lequel au moins une des parties de machine (M1, M2) est agencée en rotation autour d'un axe de machine commun (MA), dans lequel l'axe de machine (MA) s'étend parallèlement à l'axe de rotation (DA).

2. Dispositif selon la revendication 1, **caractérisé en ce que** l'unité de capteur (5) est formée par une unité de capteur électrooptique (5.1) ou une unité de capteur électromagnétique (5.2).

3. Dispositif selon la revendication 1 ou 2, **caractérisé en ce que** les moyens de mise à l'échelle rotatifs (6) présentent plusieurs repères de mesure (6.1) pour l'affichage de différentes positions de rotation (D) du dispositif de rotation (4).

4. Dispositif selon la revendication 2 ou 3 **caractérisé en ce que** l'unité de capteur électrooptique (5.1) présente au moins une unité d'émission optique (5.11) pour la sollicitation des moyens de mise à l'échelle rotatifs (6.1) avec un signal optique (os) et au moins une unité de réception optique (5.12) pour la détection d'un signal optique (os') réfléchi par les moyens de mise à l'échelle (6).

5. Dispositif selon la revendication 4, **caractérisé en ce que** les moyens de mise à l'échelle rotatifs (6) sont réalisés pour la réflexion, dépendamment de la position de rotation actuelle (D) du dispositif de rotation (4), du signal optique (os) reçu par l'unité de capteur optique.

6. Dispositif selon la revendication 5, **caractérisé en ce que** les repères de mesure (6.1) du moyen de mise à l'échelle rotatif (6) sont formés par plusieurs sections de réflexion agencées concentriquement autour de l'axe de rotation (DA).

7. Dispositif selon la revendication 6, **caractérisé en ce qu'**une section de réflexion affiche une modification de la position de rotation (D) du dispositif de rotation (4) d'une valeur d'angle prédéfinie.

8. Dispositif selon la revendication 2 ou 3, **caractérisé en ce que** l'unité de capteur électromagnétique (5.2) présente au moins une électronique de capteur magnétorésistive (5.21) pour la détection d'au moins un champ magnétique.

9. Dispositif selon la revendication 8, **caractérisé en ce que** les moyens de mise à l'échelle rotatifs (6) sont formés pour la génération d'au moins un champ magnétique.

10. Dispositif selon la revendication 9, **caractérisé en ce que** les moyens de mise à l'échelle rotatifs (6) sont formés par au moins une couche de support magnétique agencée en rotation autour de l'axe de rotation (DA), laquelle est magnétisée à des sections régulières concentriquement autour de l'axe de rotation (DA) avec des pôles nord et sud.

11. Dispositif selon la revendication 10, **caractérisé en ce que** les pôles nord-sud de la couche de support magnétique sont détectables par le biais de l'électronique de capteur magnétorésistive (5.21).

12. Dispositif selon la revendication 10 ou 11, **caractérisé en ce qu'**un pôle nord-sud affiche une modification de la position de rotation (D) du dispositif de rotation (4) d'une valeur d'angle prédéfinie.

13. Dispositif selon la revendication 1, **caractérisé en ce que** la première et la seconde partie de machine (M1, M2) sont réalisées en rotation de manière différente l'une par rapport à l'autre.

14. Dispositif selon la revendication 1 ou 13, **caractérisé en ce que** la première partie de machine (M1) est réalisée pour recevoir une pluralité de dispositifs de rotation (4, 4', 4"), et ce sous la forme d'un rotor annulaire.

15. Procédé pour imprimer au moins un récipient (3) et pour détecter la position de rotation (D) d'au moins un dispositif de rotation (4) prévu pour recevoir le récipient (3), dans lequel la position de rotation (D) d'au moins un dispositif de rotation (4) prévu pour l'entraînement du récipient (3) autour d'un axe de rotation (DA) est détectée au moyen d'au moins une unité de capteur (5), **caractérisé en ce qu'**un dispositif selon l'une quelconque des revendications 1 à 14 est utilisé et la position de rotation (D) du dispositif de rotation (4) est détectée sans contact par le biais de l'unité de capteur (5).

16. Procédé selon la revendication 15, **caractérisé en ce que** la position de rotation (D) du dispositif de rotation (4) est détectée optiquement.

17. Procédé selon la revendication 15 ou 16, **caractérisé en ce que** la position de rotation (D) du dispositif de rotation (4) est détectée magnétiquement.
